# EUROPÄISCHE PATENTANMELDUNG

(11) **EP 2 189 338 A2**
(43) Veröffentlichungstag der Anmeldung: **26.05.2010**
(21) Anmeldenummer: 08010047.2
(22) Anmeldetag: 02.06.2008
(51) Int. Cl.: B60R 22/24

(54) **Fahrerkabine eines Fahrzeugs**

(30) Priorität: 28.06.2007 DE 102007030255
(71) Anmelder: HS Genion GmbH, 82205 Gilching (DE)
(72) Erfinder: Plettrichs, Peter, 86854 Amberg (DE)

(57) **Zusammenfassung**

Die Erfindung betrifft eine Fahrerkabine (1) eines Fahrzeugs, vorzugsweise eines Lastkraftwagens mit mindestens einer Fahrerkabinenöffnung (2). Eine Fahrzeugtür (3) deckt in einer ersten Position (4) die Fahrerkabinenöffnung (2) ab. In einer zweiten Position (5) gibt die Fahrzeugtür (3) die Fahrerkabinenöffnung (2) frei. Ferner weist die Fahrerkabine (1) mindestens eine Sicherheitsgurteinrichtung mit einem Sicherheitsgurtspender in der Fahrerkabine (1) und einem Gurtschloss (6) auf. Das Gurtschloss (6) ist seitlich eines Fahrerkabinensitzes (7) angeordnet. Die Fahrertür (3) weist eine Schutzvorrichtung (8) auf, die einen Schutzgurtspender (9) mit einem Schutzgurt (10) besitzt. An dem freien Ende des Schutzgurts (10) ist ein Schutzgurtpassstück (12) angeordnet. Bei ausgezogenem Schutzgurt (10) und bei eingerastetem Schutzgurtpassstück (12) ist Fahrzeugtür (3) in der ersten Position (4) zum Schutz der Insassen fixiert.

## Beschreibung

Die Erfindung betrifft eine Fahrerkabine eines Fahrzeugs, vorzugsweise eines Lastkraftwagens oder eines und Wohnmobils, mit mindestens einer Fahrerkabinenöffnung. Eine Fahrzeugtür deckt in einer ersten Position die Fahrerkabinenöffnung ab. In einer zweiten Position gibt die Fahrzeugtür die Fahrerkabinenöffnung frei. Ferner weist die Fahrerkabine mindestens eine Sicherheitsgurteinrichtung mit einem Sicherheitsgurtspender in der Fahrerkabine und einem Gurtschloss auf. Das Gurtschloss ist seitlich eines Fahrerkabinensitzes angeordnet.

Derartige Fahrerkabinen mit Sicherheitsgurteinrichtung schützen zwar den Fahrer während der Autofahrt, können jedoch das Bedürfnis nach Sicherheit innerhalb der Fahrzeugkabine bei abgestelltem Fahrzeug, beispielsweise in einem Parkbereich nicht zufrieden stellen. Fahrzeugfahrer sind bisher auf Provisorien angewiesen, wenn sie den Innenraum der Fahrerkabine zusätzlich sichern wollen. Derartige provisorische Lösungen sehen vor, beispielsweise zwei Fahrzeugtüren einer Fahrerkabine durch Seile untereinander zu verspannen, was jedoch eine Nutzung der Fahrerkabinensitze einschränkt. Auch ist das Anbringen dieser zusätzlichen Sicherheit umständlich und zeitraubend. Außerdem ist die sicherheitsrelevante Zuverlässigkeit derartiger provisorischer Lösungen nicht immer gegeben.

Aus der Druckschrift DE 41 08 440 A1 ist es bekannt, dass der in der Fahrgastzelle angeordnete Sicherheitsgurt eine Gurtkraftbegrenzer aufweist, der im Innern eines Türholms des Fahrzeugs angeordnet ist, wobei der Türholm nahe der Schwenkachse der Fahrzeugtür positioniert ist. Diese bekannte Sicherheitsgurtanordnung weist zwar alle Merkmale des Oberbegriffs der vorliegenden Erfindung auf, erhöht jedoch nicht die Sicherheit der Insassen, wenn das Fahrzeug beispielsweise zum Parken abgestellt ist.

Aus der Druckschrift US 4,061,365 ist darüber hinaus ein Sicherheitsgurtsystem bekannt, bei dem der Gurtspender seitlich eines Fahrzeugsitzes angeordnet ist und das Gurtschloss entlang einem Dachrahmenholm zum automatischen Anlegen eines Schultergurts gleitet. Auch dieses Sicherheitssystem kann den Bedarf einer zusätzlichen Sicherheit gegen gewaltsames Öffnen der Fahrzeugtür bei abgestelltem Fahrzeug und Anwesenheit von Insassen innerhalb des Fahrzeugs nicht verbessern. Als weitere Variante könnte ein Gurtspender seitlich am Sitz (Gurtauslauf Richtung Tür) montiert werden. Die Gurtzunge des zusätzlichen Gurtspenders wird durch einen Bügel, der an (oder in) der Tür befestigt wurde, gefädelt bzw. hindurchgeführt und dann über die Sitzfläche und im Gurtschloss verriegelt.

Aufgabe der Erfindung ist es, eine zusätzliche Schutzvorrichtung für Fahrerkabinen zu schaffen, die einerseits preiswert nachzurüsten ist und andererseits die Sicherheit von Fahrzeuginsassen in einem abgestellten oder parkenden Fahrzeug erhöht.

Diese Aufgabe wird mit dem Gegenstand des unabhängigen Anspruchs 1 gelöst. Vorteilhafte Weiterbildungen der Erfindung ergeben sich aus den abhängigen Ansprüchen.

Erfindungsgemäß wird eine Fahrerkabine eines Fahrzeugs, vorzugsweise eines Lastkraftwagens mit mindestens einer Fahrerkabinenöffnung vorgesehen, wobei eine Fahrzeugtür in einer ersten Position die Fahrerkabinenöffnung abdeckt. In einer zweiten Position gibt die Fahrzeugtür die Fahrerkabinenöffnung frei. Ferner weist die Fahrerkabine mindestens eine Sicherheitsgurteinrichtung mit einem Sicherheitsgurtspender in der Fahrerkabine und einem Gurtschloss auf. Das Gurtschloss ist seitlich eines Fahrerkabinensitzes angeordnet. Die Fahrertür weist eine Schutzvorrichtung auf, die einen Schutzgurtspender mit einem Schutzgurt aufweist. An dem freien Ende des Schutzgurts ist ein Schutzgurtpassstück angeordnet, so dass bei ausgezogenem Schutzgurt und bei eingerastetem Schutzgurtpassstück in das Gurtschloss die Fahrzeugtür in der ersten Position zum Schutz von Insassen fixiert ist.

Diese Vorrichtung hat den Vorteil, dass mit wenigen Handgriffen die Fahrzeugtür zusätzlich zu der Fahrzeugtürverriegelung eine weitere Schutzvorrichtung besitzt, indem ein Schutzgurt aus einem Schutzgurtspender in der Fahrzeugtür herausgezogen wird, über einen Fahrerkabinensitz gezogen oder gelegt wird und in das seitlich angeordnete Standardgurtschloss einer standardmäßigen Sicherheitsgurteinrichtung eingerastet wird. Mit diesem in die Fahrzeugtür bzw. die Fahrerkabine integrierten System ist der Vorteil verbunden, dass keine störenden Teile oder Seile im Innenraum der Fahrerkabine die freie Bewegung behindern. Ferner ist es bei defekter Seitenscheibe schwierig bis gar nicht möglich von außen diese Schutzeinrichtung zu entriegeln. Hinzu kommt, dass kein zeitraubendes und umständliches Hantieren mit zusätzlichen Spanngurten und anderen Teilen, die man zwischen zwei Fahrzeugtüren der Fahrerkabine spannen könnte erforderlich wird. Außerdem ist durch Verwendung des bereits vorhandenen Seriengurtschlosses seitlich eines der Fahrerkabinensitze ein einfacher Aufbau des zusätzlichen Schutzsystems gewährleistet bei gleichzeitig geringem Teilepreis, geringen Nachrüstkosten und entsprechend geringem Zusatzgewicht.

In einer bevorzugten Ausführungsform der Erfindung ist der Schutzgurtspender an der Fahrertür von einer Schwenkachse der Fahrertür soweit entfernt angeordnet, dass ein maximales Drehmoment durch den Schutzgurt auf die Fahrzeugtür in der ersten Position einwirkt. Je näher hingegen der Schutzgurtspender an der Fahrzeugtür zu der Schwenkachse der Fahrzeugtür hin angeordnet ist, umso geringer wird das mögliche Schließmoment und damit wird die Schutzfunktion deutlich vermindert. Das aus der Druckschrift DE 41 08 440 A1 bereits oben erwähnte Sicherheitssystem kann somit die Schutzwirkung der erfindungsgemäßen Schutzvorrichtung nicht erreichen, zumal das Schließmoment durch Anordnung des Schutzgurtspenders bzw. eines Seilzugs für den Schutzgurt in der Nähe der Schwenkachse der Fahrzeugtür äußerst minimal wäre.

In einer weiteren Ausführungsform der Erfindung ist der Schutzgurtspender unter einer Fahrzeugtürverkleidung angeordnet. Dieses hat den Vorteil, dass der Schutzgurtspender an der Rahmenkonstruktion der Fahrzeugtür, die durch die Fahrzeugtürverkleidung abgedeckt ist, angeordnet werden kann und damit zuverlässig und stabil mit der Fahrzeugtür verbunden werden kann.

Ferner ist es in vorteilhafter Weise vorgesehen, dass die Fahrzeugtürverkleidung einen Schlitz aufweist, aus dem lediglich ein freies Ende des Schutzgurts mit dem an dem freien Ende angeordnetem Schutzgurtpassstück herausragt. Damit ist das Schutzgurtpassstück immer griffbereit, so dass der Schutzgurt bei Bedarf aus den Schlitz in der Fahrzeugtürverkleidung und somit aus dem Schutzgurtspender herausgezogen werden kann. Dieser Schlitz ist vorzugsweise in der Höhe der Fahrerkabinensitzflächen der Fahrerkabinensitze oder geringfügig tiefer angeordnet sein.

Um sicherzustellen, dass das vorhandene Gurtschloss einer Fahrerkabine verwendet werden kann, um die Schutzvorrichtung bei Bedarf einrasten zu lassen, ist das Schutzgurtpassstück an das Gurtschloss des Sicherheitsgurts angepasst. Außerdem kann die Länge des Schutzgurts des Schutzgurtspenders exakt der Entfernung zwischen der Fahrertür in ihrer ersten Position und dem Gurtschloss angepasst sein, so dass nach Einrasten des Schutzgurtpassstückes in das Gurtschloss ein gewaltsames Öffnen der Fahrzeugtür von außen zusätzlich behindert wird.

In einer weiteren bevorzugten Ausführungsform der Erfindung weist der Schutzgurtspender eine Arretiervorrichtung auf, mit welcher die ausziehbare Länge des Schutzgurts an unterschiedliche Entfernungen zwischen der Fahrertür in ihrer ersten Position und dem Gurtschloss anpassbar ist. Darüber hinaus kann der Schutzgurtspender eine automatische Spannvorrichtung aufweisen, mit der eine vorgegebene Spannung auf den Schutzgurt nach Einrasten des Schutzgurtpassstücks in das Gurtschloss einstellbar und einrastbar ist.

Weiterhin ist es vorgesehen, dass der Schutzgurtspender derart an der Fahrertür angeordnet ist, dass der ausgezogene und in dem Gurtschloss fixierte Schutzgurt flach auf dem Fahrerkabinensitz angeordnet ist. Damit ist der Vorteil verbunden, dass sowohl der Fahrersitz in der Fahrerkabine als auch der Beifahrersitz, bzw. die Beifahrersitze uneingeschränkt benutzt werden können. Solange jedoch das für den Sicherheitsgurt vorgesehene Gurtschloss von dem Schutzgurtpassstück belegt ist, können Sicherheitsgurte nicht angelegt werden und folglich ist diese Schutzvorrichtung nur bei geparkten oder abgestellten Fahrzeugen anwendbar.

In einer weiteren bevorzugten Ausführungsform der Erfindung weist der Schutzgurt einen Schneidschutz auf. Dieser Schneidschutz kann vorzugsweise dadurch verwirklicht werden, dass in den Schutzgurt eingearbeitete Stahldrahtgewebe vorgesehen sind. Derartige Stahldrahtgewebe können mit einfachen Hilfsmitteln beispielsweise nach Einschlagen der Seitenscheiben des Fahrzeugs nicht aufgetrennt werden, so dass die Fahrzeugtür verriegelt bleibt.

In einer weiteren bevorzugten Ausführungsform der Erfindung weist die Fahrerkabine ein Schutzgurtschloss zusätzlich zum Gurtschloss des Sicherheitsgurts auf, wobei das Schutzgurtpassstück an das Schutzgurtschloss angepasst ist. In dieser Ausführungsform der Erfindung ist es möglich, die Schutzvorrichtung auch dann zu verwenden, wenn das Fahrzeug in Bewegung ist. Dieses hat Vorteile, wenn das Fahrzeug durch Unruhegebiete geführt werden muss und vor marodierenden Banden zu schützen ist.

Ferner ist es vorgesehen, dass der Schutzgurtspender eine automatische Rückrolleinrichtung aufweist, die aktiviert werden kann, sobald das Schutzgurtpassstück von dem Gurtschloss bzw. dem Schutzgurtschloss entfernt wird.

Die Erfindung wird nun anhand der beigefügten Figuren näher erläutert.
- Figur 1: zeigt eine schematische perspektivische Ansicht einer Hälfte einer Fahrerkabine mit geöffneter Fahrzeugtür;
- Figur 2: zeigt eine schematische perspektivische Ansicht der Hälfte der Fahrzeugkabine gemäß Figur 1 bei geschlossener Fahrzeugtür.

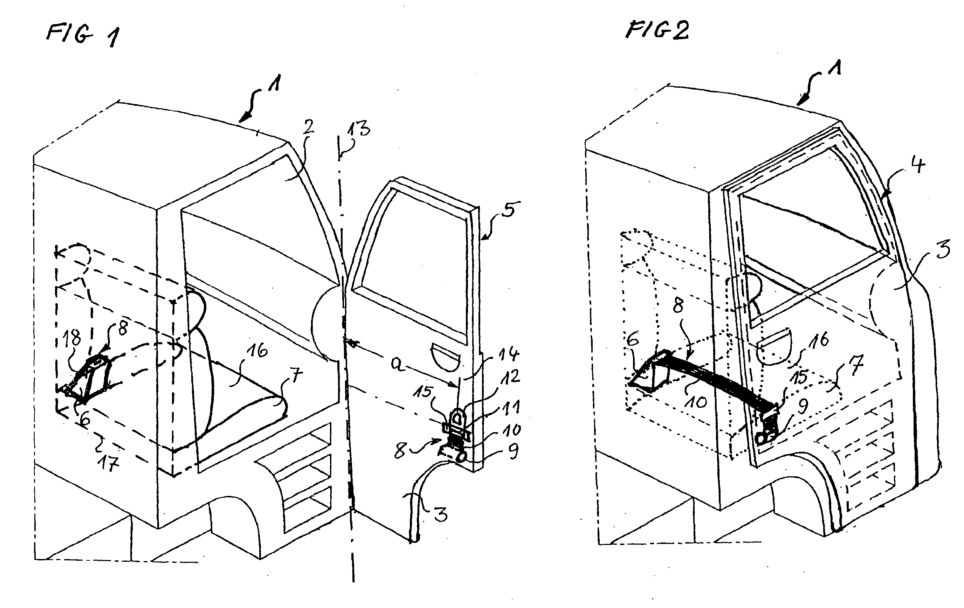

Figur 1 zeigt eine schematische perspektivische Ansicht einer Hälfte einer Fahrzeugkabine 1 mit geöffneter Fahrzeugtür 3, die in der Lage ist eine Fahrerkabinenöffnung 2 abzudecken. Die Fahrzeugtür 3 befindet sich in dieser Darstellung in ihrer zweiten Position 5 und wurde dazu um die Schwenkachse 13 der Fahrzeugtür 3 geschwenkt. Auf der Innenseite der Fahrzeugtür 3 in einem Abstand a zur Schwenkachse 13 ist ein Schutzgurtspender 9 unter einer Fahrzeugtürverkleidung 14 angeordnet. Dieser Schutzgurtspender 9 weist einen Schutzgurt 10 auf, der über einen Schlitz 15 in der Fahrzeugtürverkleidung 14 mit seinem freien Ende 11 und dem am freien Ende 11 fixierten Schutzgurtpassstück 12 aus dem Schlitz 15 herausragt.

Der Abstand a von der Schwenkachse 13 der Fahrzeugtür 3 ist derart gewählt, dass ein maximales Drehmoment zum Fixieren der Fahrzeugtür 3 in einem geschlossenen Zustand wirksam wird. Außerdem wird der Schlitz 15 in der Fahrzeugtürverkleidung 14 in seiner Höher über Grund derart angeordnet, dass er in etwa die Fahrerkabinensitzflächenhöhe 16 bei geschlossener Tür erreicht oder geringfügig unterhalb der Fahrerkabinensitzfläche 16 angeordnet ist. Mit gestrichelten Linien 17 ist die Position eines Fahrerkabinensitzes 7 innerhalb der Fahrerkabine 1 angedeutet und ein Gurtschloss 6, das seitliche von der Fahrerkabinensitzfläche 16 angeordnet ist, ist mit durchgezogenen Linien 18 hervorgehoben, um zu zeigen, dass ein derartiges Gurtschloss 6 in der gezeigten Position relativ zum Fahrerkabinensitz 7 sowohl als Gurtschloss 6 für einen Sicherheitsgurt als auch als Gurtschloss für den Schutzgurt 10 des Schutzgurtspenders 9 in der Fahrzeugtür 3 eingesetzt werden kann.

In diesem Fall entspricht die Gestaltung und Struktur des Schutzgurtpassstücks 12 exakt der Gestaltung und Struktur des für die Fahrerkabine 1 vorgesehenen Sicherheitsgurtpassstücks. Soll die Schutzvorrichtung 8 auch einsetzbar sein, wenn die Sicherheitsgurte angelegt sind, so ist ein weiters hier nicht gezeigtes Schutzgurtschloss in der Fahrerkabine 1 vorzusehen. Mit der gemäß Figur 1 gezeigten Lösung wird eine preiswerte zusätzliche Schutzvorrichtung 8 realisiert, weil lediglich in einem Mindestabstand a von der Schwenkachse 13 ein Schutzgurtspender 9 an der Fahrzeugtür zu fixieren ist. Für eine derartige Fixierung eignet sich insbesondere die durch die Fahrzeugtürverkleidung abgedeckte und in dieser Darstellung nicht sichtbare Rahmenkonstruktion der Fahrzeugtür 3.

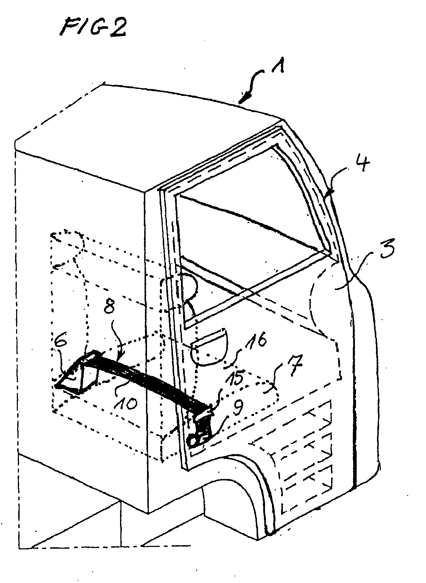

Figur 2 zeigt eine schematische perspektivische Ansicht der Hälfte der Fahrzeugkabine 1 gemäß Figur 1 bei geschlossener Fahrzeugtür 3 in ihrer ersten Position 4. In dieser Darstellung ist die Schutzvorrichtung 8 ausgezogen und eingerastet. Aufgrund der Anordnung des Schlitzes 15 in der Fahrzeugtürverkleidung liegt der Schutzgurt 10 auf der Fahrerkabinensitzfläche 16 auf, so dass der Fahrerkabinensitz 7 uneingeschränkt funktionstüchtig bleibt und als solcher eingesetzt werden kann.

Dieser Schutzgurt 10 kann durch eine Arretiervorrichtung, die in dem Schutzgurtspender 9 integriert sein kann, unter Zugspannung gehalten und in seiner Länge arretiert werden. Eine derartige Arretierungsvorrichtung kann aus einem Zahnkranz oder einem Lochkranz oder einem Profilkranz bestehen, in den eine Klinke einrasten kann. Mit Hilfe eines Betätigungsglieds kann die Klinke nach Öffnen der Schutzvorrichtung bzw. beim Herausnehmen des Schutzgurtpassstücks 12 aus dem Gurtschloss 6 eine automatische Rückrolleinrichtung des Schutzgurtspenders 9 freigeben. Diese Rückrolleinrichtung zieht automatisch den Schutzgurt 10 in den Schutzgurtspender 9 zurück, so dass nun die Fahrzeugtür geöffnet werden kann. Eine derartige Entriegelungsvorrichtung kann ein elektromagnetisches. Stahlglied oder ein mechanisches Betätigungsglied aufweisen.

In einer vereinfachten Version der Schutzvorrichtung weist der Schutzgurt 10 exakt die Länge auf, die erforderlich ist, um die Fahrzeugtür 3 unter Vorspannung mit dem Gurtschloss 6 zu verbinden. Der Schutzgurt 10 der Schutzvorrichtung 8 kann darüber hinaus einen Schneidschutz aufweisen, der beispielsweise in den Schutzgurt eingewebte oder eingewirkte Stahldrähte aufweist.

### Bezugszeichenliste

- 1: Fahrerkabine
- 2: Fahrerkabinenöffnung
- 3: Fahrzeugtür
- 4: erste Position (geschlossene Fahrzeugtür)
- 5: zweite Position (offene Fahrzeugtür)
- 6: Gurtschloss
- 7: Fahrerkabinensitz
- 8: Schutzvorrichtung
- 9: Schutzgurtspender
- 10: Schutzgurt
- 11: freies Ende des Schutzgurts
- 12: Schutzgurtpassstück
- 13: Schwenkachse der Fahrzeugtür
- 14: Fahrzeugtürverkleidung
- 15: Schlitz (in der Fahrzeugtürverkleidung)
- 16: Fahrerkabinensitzfläche
- 17: gestrichelte Linie
- 18: durchgezogene Linie

- a: Abstand

## Patentansprüche

1. Fahrerkabine eines Fahrzeugs, vorzugsweise eines Lastkraftwagens oder eines Wohnmobils mit
- mindestens einer Fahrerkabinenöffnung (2),
- einer Fahrzeugtür (3), welche in einer ersten Position (4) die Fahrerkabinenöffnung (2) abdeckt und in einer zweiten Position (5) die Fahrerkabinenöffnung (2) freigibt;
- einer Sicherheitsgurteinrichtung, mit einem Sicherheitsgurtspender in der Fahrerkabine (1) und einem Gurtschloss (6), das seitlich eines Fahrerkabinensitzes (7) angeordnet ist,
**dadurch gekennzeichnet, dass** die Fahrzeugtür (3) eine Schutzvorrichtung (8) aufweist, die einen Schutzgurtspender (9) mit einem Schutzgurt (10) aufweist, an dessen freiem Ende (11) ein Schutzgurtpassstück (12) angeordnet ist, wobei die Fahrzeugtür (3) bei ausgezogenem Schutzgurt (10) und bei eingerastetem Schutzgurtpassstück (12) in der ersten Position (4) zum Schutz der Insassen fixiert ist.

2. Fahrerkabine nach Anspruch 1,
**dadurch gekennzeichnet, dass**
der Schutzgurtspender (9) an der Fahrzeugtür (3) von einer Schwenkachse (13) der Fahrzeugtür (3) so weit entfernt angeordnet ist, dass ein maximales Schließmoment durch den Schutzgurt (10) auf die Fahrzeugtür (3) in der ersten Position (4) einwirkt.

3. Fahrerkabine nach Anspruch 1 oder Anspruch 2,
**dadurch gekennzeichnet, dass**
der Schutzgurtspender (9) unter einer Fahrzeugtürverkleidung (14) angeordnet ist.

4. Fahrerkabine nach Anspruch 3,
**dadurch gekennzeichnet, dass**
die Fahrzeugtürverkleidung (14) einen Schlitz (15) aufweist, aus dem der Schutzgurt (10) mit seinem freien Ende (11) und dem Schutzgurtpassstück (12) herausragt.

5. Fahrerkabine nach einem der vorhergehenden Ansprüche,
**dadurch gekennzeichnet, dass**
das Schutzgurtpassstück (12) an das Gurtschloss (6) des Sicherheitsgurts angepasst ist.

6. Fahrerkabine nach einem der vorhergehenden Ansprüche,
**dadurch gekennzeichnet, dass**
die Länge des Schutzgurts (10) des Schutzgurtspenders (9) der Entfernung zwischen der Fahrertür (3) in der ersten Position (4) und dem Gurt- ' schloss (6) angepasst ist.

7. Fahrerkabine nach einem der vorhergehenden Ansprüche,
**dadurch gekennzeichnet, dass**
der Schutzgurtspender (9) eine Arretiervorrichtung aufweist, mit welcher die ausziehbare Länge des Schutzgurts (10) an unterschiedliche Entfernungen zwischen der Fahrertür (3) in der ersten Position (4) und dem Gurtschloss (6) anpassbar ist.

8. Fahrerkabine nach einem der vorhergehenden Ansprüche,
**dadurch gekennzeichnet, dass**
der Schutzgurtspender (9) derart an der Fahrertür (3) angeordnet ist, dass der ausgezogene und in dem Gurtschloss (6) fixierte Schutzgurt (10) flach auf dem Fahrerkabinensitz (7) angeordnet ist.

9. Fahrerkabine nach einem der vorhergehenden Ansprüche,
**dadurch gekennzeichnet, dass**
der Schutzgurt (10) einen Schneidschutz aufweist.

10. Fahrerkabine nach Anspruch 9,
**dadurch gekennzeichnet, dass**
der Schneidschutz ein in den Schutzgurt (10) eingearbeitetes Stahldrahtgewebe aufweist.

11. Fahrerkabine nach einem der vorhergehenden Ansprüche,
**dadurch gekennzeichnet, dass**
die Fahrerkabine (1) ein Schutzgurtschloss zusätzlich zum Gurtschloss (6) des Sicherheitsgurts aufweist, wobei das Schutzgurtpassstück (12) an das Schutzgurtschloss angepasst ist.

12. Fahrerkabine nach einem der vorhergehenden Ansprüche,
**dadurch gekennzeichnet, dass** der Schutzgurtspender (9) eine automatische Rückrolleinrichtung aufweist.
